Europäisches Patentamt

European Patent Office

Office européen des brevets

(11) Numéro de publication : **0 451 037 A1**

# (12) DEMANDE DE BREVET EUROPEEN

(21) Numéro de dépôt : 91400874.3

(51) Int. Cl.⁵ : **F16G 5/16**

(22) Date de dépôt : 29.03.91

(30) Priorité : 02.04.90 FR 9004162

(43) Date de publication de la demande :
09.10.91 Bulletin 91/41

(84) Etats contractants désignés :
AT BE CH DE DK ES FR GB GR IT LI LU NL SE

(71) Demandeur : CAOUTCHOUC MANUFACTURE
ET PLASTIQUES
143 bis, rue Yves Le Coz
F-78000 Versailles (FR)

(72) Inventeur : Douhairet, Louis
Chemin des Rimbault,
Saint-Leger-Des-Vignes
F-58300 Decize (FR)
Inventeur : Play, Daniel
42, les Hauts-Prés, Saint-Genis-Les-Ollieres
F-69290 Craponne (FR)
Inventeur : Trinquard, Roger
3, rue de la Paix, Saint-Leger-Des-Vignes
F-58300 Decize (FR)

(54) **Perfectionnement à un organe de transmission pour variateur continu de vitesse fonctionnant à sec, à maillons poussants et âme trapézoidale.**

(57) Organe de transmission pour variateur de vitesse à maillons transversaux poussants, fonctionnant à sec, disposés autour d'une âme sans fin (2) formée d'une courroie trapézoïdale à flancs obliques (5) en contact avec les faces intérieures (10) des étriers (1) ou des étriers fermés (15) formant les maillons dont les faces obliques extérieures (11) sont en contact avec les flasques des poulies de transmission. Application au domaine de la variation continue de vitesse pour automobiles et machines industrielles.

## FIG. 2

EP 0 451 037 A1

La présente invention concerne le domaine des transmissions à variation de vitesse continue par déplacement relatif des flasques de poulies fonctionnant par adhérence mécanique à sec. Elle constitue un perfectionnement à l'organe de transmission de puissance sous forme de lien souple, formé d'une bande sans fin qui porte des éléments transversalement rigides appelés maillons, décrit dans le document EP 0 325 497 de la demanderesse.

Outre le document précité, l'art antérieur comprend les documents DE 2.557.724 de HEYNAU, décrivant des surfaces conjuguées de contact entre maillons pour assurer une tenue transversale entre eux, FR 2.540.953 de RNUR et CPIO décrivant des pions de centrage et trous conjugués pour assurer la tenue transversale entre cavaliers caractérisés par leur surface de contact avec une lanière formant l'âme souple, EP 0.073.962 de NISSAN MOTOR présentant des cavaliers formés de blocs alternés à 180° équipés alternativement de pions et de trous, US 4.433.965 de HATTORI et US 4.610.648 de MIRANTI relatifs à des âmes souples constituées de courroies plates portant des maillons constitués de polymères chargés ou composites éventuellement renforcés de fibres courtes. Tous ces documents concernent, essentiellement, un lien souple de transmission dont l'âme flexible est une bande plate, lanière ou superposition de feuillards métalliques. Tous les dispositifs décrits dans ces documents s'avèrent, en utilisation, d'une extrême instabilité dans la partie rectiligne de la trajectoire entre poulies, où la poussée s'exerce par contact réciproque entre les maillons alignés. Dans le document EP 0 325 497, une disposition particulière cherchait à porter remède à une telle instabilité, par la mise en coïncidence entre la fibre neutre de l'âme sans fin et la ligne primitive par laquelle se fait le contact des maillons avec les flasques des poulies.

A l'usage, il s'avère, cependant, que même la coïncidence entre la ligne primitive fictive des maillons poussants et la fibre neutre de l'âme sans fin est insuffisante pour assurer la stabilité du dispositif lorsque sont à transmettre des puissances nettement supérieures.

L'objectif de l'invention est donc de proposer des perfectionnements de l'organe de transmission pour variateur continu de vitesse, objet de la demande EP 0 325 497, permettant l'accroissement des performances et remédiant aux conditions d'instabilité. Les variantes portent, à la fois, sur la définition de l'âme sans fin, sur la zone de contact entre ladite âme sans fin et les maillons poussants et sur la conception de ces derniers. Une solution beaucoup plus amortissante que la simple coïncidence entre la ligne primitive des maillons et la fibre neutre d'une âme sans fin demeurée plate et très souple s'avère possible par l'utilisation d'une âme sans fin constituée d'une courroie trapézoïdale de dimensions classiques. Du fait de la forme géométrique d'une telle courroie trapézoïdale, le contact entre les maillons poussants et l'âme sans fin s'opère par des surfaces exemptes de mouvements relatifs, ce qui permet une meilleure répartition des contraintes et réduit, en conséquence, l'échauffement en service.

L'invention consiste donc en un perfectionnement à un organe de transmission pour variateur continu de vitesse, à maillons transversaux poussants parfaitement symétriques axialement, présentant sur chacune de leurs faces un dispositif de guidage ne nécessitant pas les repérages des faces lors du montage desdits maillons transversaux sur l'âme sans fin, dont le coefficient de friction sur ladite âme sans fin est au plus égal à 0,4 et dont les faces obliques extérieures forment la surface qui vient au contact des flasques des poulies de transmission, organe de transmission caractérisé en ce que l'âme sans fin est une courroie trapézoïdale à flancs obliques en contact avec les faces intérieures des maillons en forme d'étriers entourant ladite courroie trapézoïdale.

L'invention sera mieux comprise à la lecture de la description accompagnant les dessins dans lesquels :
 – la figure 1 est une vue latérale du montage montrant quelques maillons alignés sur l'âme souple ;
 – la figure 2 est une section droite de la transmission entre deux maillons, coupant l'âme souple ;
 – La figure 3 représente une variante à maillons constitués d'étriers fermés entourant l'âme souple vue en section droite, sur la vue 3a, à l'état libre, sur la vue 3b, en place.

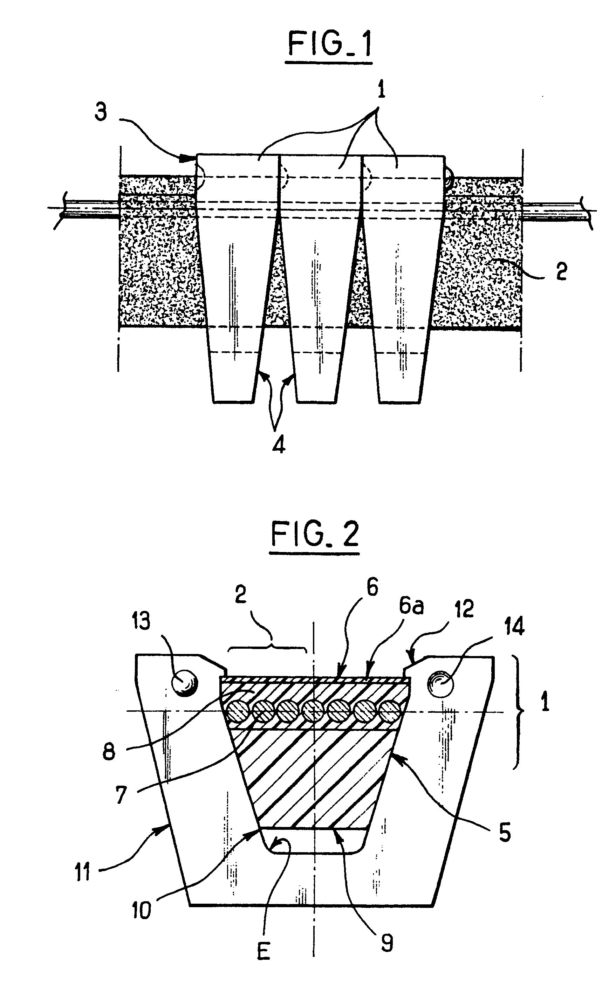

La figure 1 représente, en vue latérale, le montage de quelques maillons transversalement rigides, qui pour bien identifier leur rôle seront appelés par la suite étriers. Les étriers (1) sont montés alignés sur l'âme sans fin (2), ici représentée dans sa trajectoire rectiligne, entre les deux poulies d'une transmission à rapport variable par changement du rayon de contact.

La transmission de puissance se fait majoritairement par l'appui réciproque desdits étriers (1) par leurs faces parallèles (3). Leurs faces obliques (4) sont symétriquement dégagées, comme représenté, pour permettre l'enroulement, sur un rayon variable, lors du contact sur les flasques des poulies. La face parallèle (3) et la face oblique (4) sont raccordées de façon progressive.

L'étrier (1) est réalisé en matériaux polymériques de haut module, tels qu'un composite à matrice polymérique thermoplastique ou thermodurcissable et à renforcement par fibres de longueur au plus égale à 30 millimètres. Dans une variante citée à titre non limitatif, le renforcement peut être constitué de fibres courtes de polyamide aromatique, de fibres de verre, de carbone ou de bore, le taux de fibre étant compris entre 10 et 60 % du poids de la matrice polymérique thermoplastique ou thermodurcissable.

La figure 2 est une coupe perpendiculaire de l'organe de transmission, par une section droite de l'âme sans fin (2), constituée d'une courroie trapézoïdale. Ladite courroie trapézoïdale présente des flancs obliques (5) soit nus (dans le type de courroies dites à flancs nus), soit revêtus d'un tissu d'enveloppage (dans les courroies dites enveloppées), destinés au contact sur les étriers. La surface extérieure (6) est représentée par la grande base de la section. L'élément de renforcement (7) est constitué d'un matériau, le plus généralement textile, à haut module, noyé dans une base en composition élastomérique (8) à laquelle il est intimement lié par des moyens physico-chimiques, comme aux éléments résistant à la compression transversale qui s'étendent jusqu'à la petite base (9) de la section. Ledit élément de renforcement (7) constitue la fibre neutre de la courroie trapézoïdale.

Dans cet usage, ladite courroie, lors de l'enroulement sur les poulies, est en contact par la totalité de ses flancs obliques (5) avec les faces intérieures (10) de chaque étrier. Lors du passage sur les poulies, chaque étrier (1) est, par contre, en contact par les faces obliques extérieures (11) avec les flasques desdites poulies, dont l'angle n'est pas nécessairement le même que celui des faces intérieures (10).

Des harpons latéraux (12) sont ménagés sur l'étrier (1), de part et d'autre de la surface extérieure (6) de l'âme sans fin (2). Leur écartement est adapté à l'élasticité de la courroie trapézoïdale pour pouvoir engager à force l'étrier (1) par dessus celle-ci au cours du montage.

Après l'assemblage, la surface cependant très réduite desdits harpons latéraux (12), empêche la chute des étriers dans la partie rectiligne de la transmission, en particulier dans le brin de retour où les maillons poussants que constituent les étriers (1) ne sont pas nécessairement en contact entre eux, par leurs faces parallèles. L'expérience a montré qu'un revêtement (6a), à faible coefficient de frottement, était opportun sur la surface extérieure (6). Ledit revêtement (6a), à faible coefficient de frottement, est avantageusement constitué d'un film de polyéthylène de très haute masse moléculaire ou de polytétrafluorure d'éthylène, par exemple.

Des dispositifs de guidage par pion de centrage (13) et évidement (14), connus dans l'art antérieur, demeurent totalement compatibles avec le contact par les faces intérieures (10) de l'étrier contre les flancs obliques (5) de l'âme sans fin.

Il apparaît, en outre, que la pression de contact sur lesdites faces intérieures (10) de l'étrier (1) et les flancs obliques (5) de l'âme sans fin (2) s'exerce, avec variation très rapide des contraintes, lors du passage de la situation rectiligne à la situation enroulée sur poulie. Par contre, ladite pression de contact s'exerce entre deux surfaces qui restent en contact permanent, contrairement à l'usage d'une courroie trapézoïdale classique, dont chaque point n'entre que périodiquement en contact avec des flasques de poulies.

Les lignes primitives fictives des étriers (1) coïncidant dans la région de la fibre neutre de l'âme sans fin (2) représentée par l'élément de renforcement (7), aucun écartement entre matériaux constitutifs n'est nécessaire pour le fonctionnement.

Des déplacements micrométriques peuvent se produire dans la zone des harpons latéraux (12) et de la surface extérieure (6), du fait que l'une des surfaces - constituée de l'empilement des étriers (1) est formée de solides d'épaisseur constante, dont les faces parallèles décollent l'une de l'autre lors de l'enroulement, et l'autre est celle du polymère de l'âme sans fin (2) dont la longueur varie, hors de la fibre neutre, entre situation rectiligne et enroulement. Pour cette raison, le revêtement (6a), à faible coefficient de frottement, a été reconnu nécessaire, mais doit conserver une déformabilité compatible avec la flexion de la courroie.

Au dessous de la fibre neutre, dans la zone des éléments résistant à la compression transversale, la forme effilée des faces obliques (4) sur les étriers (1) réduit la surface de contact entre ceux-ci et l'âme sans fin (2) à une fraction de la surface, élastiquement déformable en flexion, de la courroie.

Lors de la courbure, les étriers (1) se rapprochent et participent donc à la compression volumétrique de cette partie de l'âme sans fin (2) située entre la fibre neutre, au niveau de l'élément de renforcement (7) et la petite base (9) de la section.

Il en résulte que l'utilisation d'une courroie de dimensions normalisées pour applications industrielles ou automobiles, en tant qu'âme sans fin (2) de l'organe de transmission pour variateur de vitesse, acceptant des contraintes nettement plus élevées que celles prévues dans leur usage habituel, permet la transmission de puissances très supérieures. Des contraintes superficielles fort élevées par rapport aux usages selon l'art antérieur s'exercent donc ; l'expérience montre qu'une répartition des puissances transmises peut être attribuée pour un tiers à la traction par la courroie trapézoïdale, pour les deux tiers par l'appui réciproque des maillons poussants. Les contraintes sont ici beaucoup mieux réparties sur toute la surface concernée, essentiellement en compression le long des flancs obliques (5) de l'âme sans fin (2), sans mouvement relatif.

Or, des pressions du même ordre de grandeur, car elles en sont la conséquence, s'exercent de façon analogue sur les faces obliques extérieures (11) de l'étrier (1), plaquées par leur appui sur les flasques des poulies.

Les risques de contraintes alternées élevées, dans la zone du fond arrondi de l'étrier (1), sont considérablement réduits, dans l'application objet du présent perfectionnement, du fait de l'utilisation d'une âme sans fin (2) en forme de courroie trapézoïdale.

C'est la raison pour laquelle les puissances transmises par l'organe de transmission ainsi réalisé peuvent être d'autant plus élevées.

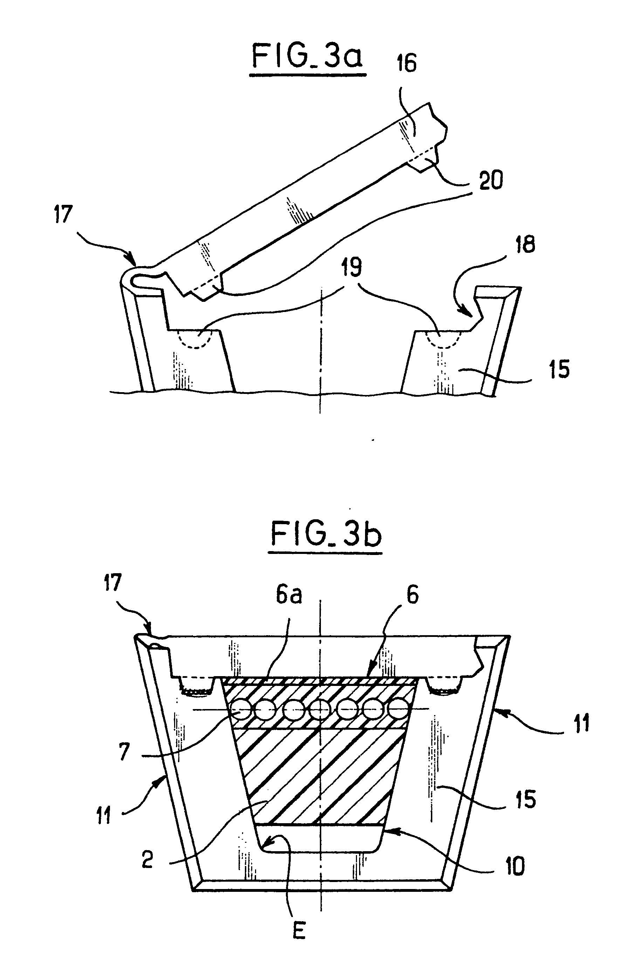

La figure 3 représente une variante, toujours en coupe perpendiculaire, d'un étrier minimisant encore davantage les risques de fatigue alternée sous l'effet des contraintes.

Au lieu d'être engagé par dessus l'âme sans fin (2) par forçage de harpons en regard du revêtement (6a), l'étrier fermé (15) est muni d'une languette (16), articulée par charnière (17), qui permet de le refermer par dessus l'âme sans fin (2) préférentiellement équipée du revêtement (6a) sur sa surface extérieure (6). La vue 3a représente l'état libre d'un étrier fermé (15) et la vue 3b l'état en place sur l'âme sans fin (2). La languette (16) est refermée après l'assemblage et, par exemple, clipsée par l'irréversibilité des formes, reposant sur son extrémité par un rebord (18). Mais, de façon préférentielle, des cavités (19) sur le corps de l'étrier fermé (15) et des bossages conjugués (20) sont ménagés sur la languette (16). D'autres dispositions sont possibles, telles que le positionnement des cavités (19) sur la languette (16), les bossages conjugués (20) étant alors portés par le corps de l'étrier fermé (15), ou encore le positionnement d'une cavité (19) et d'un bossage (20) sur la languette (16), le corps de l'étrier fermé (15) portant alors le bossage conjugué (20) et l'autre cavité (19). Après assemblage, les formes extérieures de l'étrier (1) restent symétriques afin de permettre une orientation indifférente desdits étriers au montage. Ainsi l'étrier fermé (15) constitue une poutre résistant à la compression par ses faces obliques extérieures (11) dans de meilleures conditions, en remarquant que sa petite base, où se situe la zone critique dans le fond arrondi, est d'épaisseur réduite par rapport à l'épaisseur entre faces parallèles, du fait de l'existence des faces obliques.

La courroie composite ainsi constituée peut être utilisée comme une courroie trapézoïdale large dont les renforcements en compression transversale seraient extérieurs.

Un procédé de fabrication préférentiel de l'organe de transmission selon l'invention prévoit la fabrication préalable des étriers ou étriers fermés munis de leur languette articulée par charnière par moulage en grande série d'un matériau composite en polymère renforcé de fibres courtes.

Parallèlement, la courroie trapézoïdale constituant l'âme sans fin est préférentiellement construite par superposition, autour d'un mandrin de confection d'un élément de renforcement noyé dans une base en composition polymérique. Celle-ci est intimement liée, par adhérence physico-chimique, à l'élément de renforcement, constitué de fil ou retors de matériau à haut module, préférentiellement textile, ainsi qu'aux éléments résistant à la compression qui s'étendent depuis la fibre neutre de l'âme sans fin trapézoïdale, matérialisée par l'élément de renforcement. La partie de ladite courroie trapézoïdale, comportant les éléments de résistance à la compression, est réalisée par empilement de couches de cablés enduits de composition polymérique ou par empilement de feuilles de composition polymérique renforcée de fibres courtes orientées, assurant la rigidité transversale nécessaire à ladite courroie trapézoïdale.

Le revêtement, matériau à faible coefficient de frottement, tel que du polyéthylène de très haute masse moléculaire ou du polytétrafluorure d'éthylène, est intimement lié, par adhérence physico-chimique, à la grande base de la courroie trapézoïdale, au cours de la vulcanisation, par exemple.

Un procédé de guidage approprié assure le montage de l'un ou l'autre type d'étrier sur la courroie trapézoïdale enveloppée ou à flancs nus. Dans le cas des étriers fermés, la fermeture des languettes est éventuellement suivie d'un soudage au défilé des deux alignements de bossages conjugués, par exemple par ultrasons, par collage cyanoacrylate ou tout autre procédé analogue.

Le nombre d'étriers montés sur l'âme sans fin de longueur donnée est contrôlé, afin d'assurer un jeu tolérancé avec minimum et maximum, ledit jeu étant absorbé lors de l'ovalisation de l'organe de transmission entre deux rayons d'enroulement et deux portions rectilignes.

L'organe de transmission fonctionnant à sec, selon l'invention, présente des capacités de transmission de puissance sous une forme compacte très accrues par rapport à celles de la courroie trapézoïdale qui en constitue l'âme sans fin, triplant pratiquement ses performances.

L'invention fournit aux constructeurs de variateurs de vitesse une possibilité de réalisation de lien souple à hautes performances, sans nécessiter de techniques délicates ou de nouvelles technologies complexes, utilisant des composants dont les procédés de fabrication sont éprouvés et ne nécessitent que des outillages limités quelles que soient les longueurs primitives des organes de transmission à réaliser.

## Revendications

1. Organe de transmission pour variateur continu de vitesse, à maillons transversaux poussants parfaitement symétriques axialement, présentant sur chacune de leurs faces un dispositif de guidage ne nécessitant pas de repérage desdites faces lors du moulage desdits maillons transversaux sur l'âme sans fin, dont le coefficient de friction sur l'âme sans fin est au plus égal à 0,4 et dont les faces obliques extérieures (11) forment la surfae qui vient au contact des flasques des poulies de transmission, organe de transmission caractérisé en ce que l'âme sans fin (2) est une courroie trapézoïdale à flancs obliques (5) en contact avec les faces intérieures (10) des maillons en forme d'étriers (1) ou (15), entourant ladite courroie trapézoïdale.

2. Organe de transmission pour variateur continu de vitesse selon la revendication 1, caractérisé en ce que l'âme sans fin (2) est formée d'une courroie trapézoïdale à flancs obliques (5), enveloppée.

3. Organe de transmission pour variateur continu de vitesse selon la revendication 1, caractérisé en ce que l'âme sans fin (2) est formée d'une courroie trapézoïdale à flancs obliques (5), nus.

4. Organe de transmission selon l'une des revendications 1 à 3 caractérisé en ce que l'âme sans fin (2) est pourvue, sur sa surface extérieure (6), d'un revêtement (6a) à faible coefficient de frottement, sur lequel les maillons en forme d'étriers (1) ou (15) viennent reposer, lors de la trajectoire rectiligne en brin de retour.

5. Organe de transmission selon la revendication 1, caractérisé en ce que le dispositif de guidage des maillons en forme d'étriers (1) ou (15) est assuré à la fois par l'existence de pions de centrage (13) et évidements (14) situés près des harpons latéraux (12) ou des cavités (19) et par l'alignement des faces intérieures (10) en appui sur les flancs obliques (5) de l'âme sans fin (2) constituée d'une courroie trapézoïdale.

6. Organe de transmission pour variateur continu de vitesse selon l'une des revendications 1 à 4, caractérisé en ce que les maillons en forme d'étriers sont constitués d'étriers fermés (15), comportant une languette (16), venant enfermer l'âme sans fin (2) par l'engagement dans les cavités (19) des bossages conjugués (20).

7. Organe de transmission pour variateur continu de vitesse selon la revendication 6, caractérisé en ce que la fermeture définitive de chacun des étriers fermés (15) est assurée par soudage ou collage dans les cavités (19) des bossages conjugués (20).

# FIG_1

# FIG_2

## FIG. 3a

## FIG. 3b

EP 0 451 037 A1

Office européen
des brevets

**RAPPORT DE RECHERCHE EUROPEENNE**

Numero de la demande

EP 91 40 0874

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 325 497 (CAOUTCHOUC MANUFACTURE ET PLASTIQUES)<br>* Colonne 4, ligne 7 - col2nne 5, ligne 51; revendication 1; figures 1,3a,3b *<br>--- | 1,4,5 | F 16 G 5/16 |
| Y | FR-A-1 066 329 (CHAVAND)<br>* Page 3, colonne de gauche, lignes 5-13; figure 7 *<br>--- | 1,4,5 | |
| A | PATENT ABSTRACTS OF JAPAN, vol. 11, no. 44 (M-560)[2491], 10 février 1987; & JP-A-61 206 847 (BANDO CHEM.) 13-09-1986<br>--- | 1,3 | |
| D,Y | DE-A-2 557 724 (HEYNAU)<br>--- | | |
| D,A | FR-A-2 540 953 (RENAULT)<br>--- | | |
| D,A | EP-A-0 073 962 (NISSAN MOTOR)<br>--- | | |
| D,A | US-A-4 433 965 (HATTORI)<br>--- | | DOMAINES TECHNIQUES RECHERCHES (Int. Cl.5) |
| D,A | US-A-4 610 648 (MIRANTI)<br>----- | | F 16 G |

Le présent rapport a été établi pour toutes les revendications

| Lieu de la recherche | Date d'achèvement de la recherche | Examinateur |
|---|---|---|
| LA HAYE | 10-06-1991 | BARON C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)